Europäisches Patentamt

European Patent Office

Office européen des brevets

(19)

(11) **EP 1 387 303 A2**

(12) **EUROPEAN PATENT APPLICATION**

(43) Date of publication:
**04.02.2004 Bulletin 2004/06**

(51) Int Cl.$^7$: **G06F 17/30**

(21) Application number: **03254811.7**

(22) Date of filing: **31.07.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **31.07.2002 JP 2002223944**

(71) Applicant: **Ricoh Company**
**Tokyo 143-8555 (JP)**

(72) Inventor: **Iwasaki, Masajiro**
**Yokohama-shi Kanagawa (JP)**

(74) Representative: **Leeming, John Gerard**
**J.A. Kemp & Co.,**
**14 South Square,**
**Gray's Inn**
**London WC1R 5JJ (GB)**

(54) **Image classification method and image feature space displaying method**

(57)   A classification method for classifying all images in an image database is disclosed. The method includes the steps of extracting a query image from a plurality of images in an image database, searching, according to a predetermined similarity level, for a representative image resembling the query image in a representative image classification database in which groups of images are represented by respective representative images, registering the query image as a new representative image in the representative image classification database when no resembling representative image is found as a result of the search according to the predetermined similarity level, and adding the query image into a group represented by the resembling representative image found as a result of the search according to the predetermined similarity level.

FIG.1

## Description

This invention relates to a classification method for searching vast amounts of images, an image feature space displaying method, a program for efficiently and precisely displaying feature space for vast amounts of images with a computer, and a recording medium for storing the program.

The technology shown in "Visible Interface of Feature Space for Similar Image Search" (Institute of Electronics, Information and Communication Engineers, Technology Research Report Volume No.98, Issue No.204) is an example of a known related art. The technology concerns a similar image search system which effectively shows a user the relation between images resulting from a search. With the technology, a characteristic space is calculated by analyzing image features based on the search results as a principal component analysis, and distribution of the search results can be displayed when the user selects two axes from the characteristic space to thereby display size-reduced images scattered on a visible space formed with the two axes. In other words, the technology is a method of mapping on a two dimensional display space by reducing the dimensions from the plural dimensioned space of features according to the principal component analysis. With this method, the images are disposed as they are in a two dimensional space. In another known method, images are disposed as they are in a three dimensional space, and a virtual three dimensional space is displayed in a two dimensional screen.

Furthermore, a related art is also shown in "Information Retrieval Support from a Set of References Through Interactive Visualization" (Japan Society for Software Science and Technology 13th Conference).

Nevertheless, in the former of the said related art technology shown in "Visible Interface of Feature Space for Similar Image Search", the principal components cannot be analyzed and the method cannot be conducted in a case where image feature cannot be described with vector data or where similarity of images cannot be described with linear combination.

Meanwhile, the latter of the said related art technology shown in "Information Retrieval Support from a Set of References Through Interactive Visualization" does not suit interactive display since the technology requires vast amounts of calculation and processing time.

It is a general object of the present invention to provide a classification method for efficiently and precisely displaying feature space for vast amounts of images, an image feature display method, a program for efficiently and precisely displaying feature space for vast amount of images with a computer, and a recording medium storing the program therein, that substantially obviates one or more of the problems caused by the limitations and disadvantages of the related art.

Features and advantages of the present invention will be set forth in the description which follows, and in part will become apparent from the description and the accompanying drawings, or may be learned by practice of the invention according to the teachings provided in the description. Objects as well as other features and advantages of the present invention will be realized and attained by an image classification method, image feature space displaying method, program, and recording medium particularly pointed out in the specification in such full, clear, concise, and exact terms as to enable a person having ordinary skill in the art to practice the invention.

To achieve these and other advantages and in accordance with the purpose of the invention, as embodied and broadly described herein, the invention provides a classification method for classifying an image in an image database which includes the steps of: a) extracting a query image from a plurality of images in an image database, b) searching, according to a predetermined similarity level, for a representative image resembling the query image in a representative image classification database in which groups of images are represented by respective representative images, c) registering the query image as a new representative image in the representative image classification database when no resembling representative image is found as a result of the search according to the predetermined similarity level, and d) adding the query image into a group represented by the resembling representative image found as a result of the search according to the predetermined similarity level. Thus structured, classes can be efficiently generated with use of an existing image database.

With the classification method of the present invention, the images in the image database may be obtainable by referring to the respective representative images in accordance with the predetermined similarity level. Thus structured, images included in classes can be efficiently extracted with use of an existing image data base.

The classification method of the present invention further includes a step of forming the groups into a hierarchical structure, wherein the forming step further includes the steps of: a) extracting a further query image from the representative images in the representative image classification database, b) searching, according to a further predetermined similarity level, for a further representative image resembling the further query image in a further representative image classification database in which groups of images are represented by respective further representative images, c) registering the further query image as a new further representative image in the further representative image classification database when no resembling further representative image is found as a result of the search according to a further predetermined similarity level, and d) adding the further query image into a group represented by the resembling further representative image found as a result of the search according to the predetermined similarity level. Thus structured, hierarchical classes can be efficiently generated with use of an existing database.

With the classification method of the present invention, the hierarchical structure may be formed as layers of a directory of a file system for managing the images in the image database. Thus structured, hierarchical classes can be easily managed with use of layers of a directory of an existing file.

Further, an image feature space display method of the present invention includes the steps of: a) determining k representative points (k being an integer which is more than 1) in a feature space in response to a distance between points in the feature space and representative points representative of a plurality of feature spaces surrounding the feature space, b) obtaining k sub-feature spaces by evenly allocating the points in the feature space into k representative points, c) dividing a display space into sub-display regions of k segments, the display space being divided in a manner so that the sub-feature spaces correspond to the sub-display regions, d) repeating the steps a) through c) until the sub-feature spaces and the sub-display regions are divided into minimum units, respectively, and e) arranging each image included in a minimum unit of a sub-feature space to a corresponding one of the minimum units of the sub-display regions. Thus structured, a display space of an image feature can be generated with high speed and high precision.

Further, an image feature space display method of the present invention includes the steps of: a) dividing a feature space into three sub-feature spaces, the three sub-feature spaces being composed of two sub-feature spaces disposed within a prescribed radius with respect to reference points in the feature space, and another sub-feature space other than the two sub-feature spaces, b) dividing a display space into sub-display regions of three segments, the display space being divided in a same manner as the feature space so that the sub-feature spaces correspond to the sub-display regions, c) repeating the steps a) and b) until the sub-feature spaces and the sub-display regions are divided into minimum units, respectively, and d) arranging each image included in a minimum unit of a sub-feature space to a corresponding one of the minimum units of the sub-display regions. Thus structured, a single dimension display space can be generated with high precision.

With the image feature space display method of the present invention, the reference points may be selected from points disposed nearest to representative points included in the two sub-feature spaces. Thus structured, a single dimension display space can be generated with high precision.

In the image feature space display method of the present invention, the display space may be two dimensional, wherein the feature space and the display space are divided into four sub-feature spaces and four sub-display regions in a grid manner, respectively, wherein the representative points are disposed proximally with respect to two feature spaces which are arranged adjacent to each other and tangent to the sub-feature spaces, and thus disposed distally with respect to two other feature spaces which are arranged adjacent to each other but not tangent to the sub-feature spaces. Thus structured, a two dimensional display space can be generated with high precision.

In the image feature space display method of the present invention, the display space may be three dimensional, wherein the feature space and the display space are divided into eight sub-feature spaces and eight display regions in a grid manner, respectively, wherein the representative points are disposed proximally with respect to three feature spaces which are arranged adjacent to each other and tangent to the sub-feature spaces, and thus disposed distally with respect to three other feature spaces which are arranged adjacent to each other but not tangent to the sub-feature spaces. Thus structured, a three dimensional display space can be generated with high precision.

With the image feature space display method of the present invention, the points in the feature space represent images in a representative image classification database which may be subject to the steps of: a) extracting a query image from a plurality of images in an image database, b) searching, according to a predetermined similarity level, for a representative image resembling the query image in the representative image classification database in which groups of images are represented by respective representative images, c) registering the query image as a new representative image in the representative image classification database when no resembling representative image is found as a result of the search according to the predetermined similarity level, and d) adding the query image into a group represented by the resembling representative image found as a result of the search according to the predetermined similarity level. Thus structured, vast amounts of image spaces can be displayed efficiently by displaying classes.

The image feature space display method of the present invention may further include a step of forming the groups into a hierarchical structure, wherein the forming step further includes the steps of: a) extracting a further query image from the representative images in the representative image'classification database, b) searching, according to a further predetermined similarity level, for a further representative image resembling the further query image in a further representative image classification database in which groups of images are represented by respective further representative images, c) registering the further query image as a new further representative image in the further representative image classification database when no resembling further representative image is found as a result of the search according to the further predetermined similarity level, and d) adding the further query image into a group represented by the resembling further representative image found as a result of the search according to the further predetermined similarity level. Thus structured, vast amounts of image spaces can be displayed efficiently by displaying hierarchical classes.

A program written to be executed with a computer according to the present invention includes the steps of: a) determining k representative points (k being an integer which is more than 1) in a feature space in response to a distance between points in the feature space and representative points representative of a plurality of feature spaces surrounding the feature space, b) obtaining k sub-feature spaces by evenly allocating the points in the feature space into k representative points, c) dividing a display space into sub-display regions of k segments, the display space being divided in a manner so that the sub-feature spaces correspond to the sub-display regions, d) repeating the steps a) through c) until the sub-feature spaces and the sub-display regions are divided into minimum units, respectively, and e) arranging each image included in a minimum unit of a sub-feature space to a corresponding one of the minimum units of the sub-display regions.

In the program written to be executed with a computer according to the present invention, the display space may be two dimensional, wherein the feature space and the display space are divided into four sub-feature spaces and four sub-display regions in a grid manner, respectively, wherein the representative points are disposed proximally with respect to two feature spaces which are arranged adjacent to each other and tangent to the sub-feature spaces, and thus disposed distally with respect to two other feature spaces which are arranged adjacent to each other but not tangent to the sub-feature spaces.

In the program written to be executed with a computer according to the present invention, the display space may be three dimensional, wherein the feature space and the display space are divided into eight sub-feature spaces and eight display regions in a grid manner, respectively, wherein the representative points are disposed proximally with respect to three feature spaces which are arranged adjacent to each other and tangent to the sub-feature spaces, and thus disposed distally with respect to three other feature spaces which are arranged adjacent to each other but not tangent to the sub-feature spaces.

With the program written to be executed with a computer according to the present invention, the points in the feature space may represent images in a representative image classification database which are subject to the steps of: a) extracting a query image from a plurality of images in an image database, b) searching, according to a predetermined similarity level, for a representative image resembling the query image in the representative image classification database in which groups of images are represented by respective representative images, c) registering the query image as a new representative image in the representative image classification database when no resembling representative image is found as a result of the search according to the predetermined similarity level, and d) adding the query image into a group represented by the resembling representative image found as a result of the search according to the predetermined similarity level.

The program written to be executed with a computer according to the present invention may further include a step of forming the groups into a hierarchical structure, wherein the forming step further includes the steps of: a) extracting a further query image from the representative images in the representative image classification database, b) searching, according to a further predetermined similarity level, for a further representative image resembling the further query image in a further representative image classification database in which groups of images are represented by respective further representative images, c) registering the further query image as a new further representative image in the further representative image classification database when no resembling further representative image is found as a result of the search according to the further predetermined similarity level, and d) adding the further query image into a group represented by the resembling further representative image found as a result of the search according to the further predetermined similarity level.

Further, a program written to be executed with a computer according to the present invention includes the steps of: a) dividing a feature space into three sub-feature spaces, the three sub-feature spaces being composed of two sub-feature spaces disposed within a prescribed radius with respect to two reference points in the feature space, and another sub-feature space other than the two sub-feature spaces, b) dividing a display space into sub-display regions of three segments, the display space being divided in a same manner as the feature space so that the sub-feature spaces correspond to the sub-display regions, c) repeating the steps a) and b) until the sub-feature spaces and the sub-display regions are divided into minimum units, respectively, and d) arranging each image included in a minimum unit of a sub-feature space to a corresponding one of the minimum units of the sub-display regions.

With the program written to be executed with a computer according to the present invention, the reference points may be selected from points disposed nearest to representative points included in the two sub-feature spaces.

Further, a recording medium having a program written thereto for processing with a computer according to the present invention includes the steps of: a) determining k representative points (k being an integer which is more than 1) in a feature space in response to a distance between points in the feature space and representative points representative of a plurality of feature spaces surrounding the feature space, b) obtaining k sub-feature spaces by evenly allocating the points in the feature space into k representative points, c) dividing a display space into sub-display regions of k segments, the display space being divided in a manner so that the sub-feature spaces correspond to the sub-display regions, d) repeating the steps a) through c) until the sub-feature spaces and the sub-display regions are divided into minimum units, respectively, and e) arranging each image included in a minimum unit of a sub-feature space to a corresponding one of the minimum units of the sub-display regions.

In the recording medium having a program written thereto for processing with a computer according to the present invention, the display space may be two dimensional, wherein the feature space and the display space are divided into four sub-feature spaces and four sub-display regions in a grid manner, respectively, wherein the representative points are disposed proximally with respect to two feature spaces which are arranged adjacent to each other and tangent to the sub-feature spaces, and thus disposed distally with respect to two other feature spaces which are arranged adjacent to each other but not tangent to the sub-feature spaces.

In the recording medium having a program written thereto for processing with a computer according to the present invention, the display space may be three dimensional, wherein the feature space and the display space are divided into eight sub-feature spaces and eight display regions in a grid-like manner, respectively, wherein the representative points are disposed proximally with respect to three feature spaces which are arranged adjacent to each other and tangent to the sub-feature spaces, and thus disposed distally with respect to three other feature spaces which are arranged adjacent to each other but not tangent to the sub-feature spaces.

With the recording medium having a program written thereto for processing with a computer according to the present invention, the points in the feature space may represent images in a representative image classification database which are subject to the steps of: a) extracting a query image from a plurality of images in an image database, b) searching, according to a predetermined similarity level, for a representative image resembling the query image in the representative image classification database in which groups of images are represented by respective representative images, c) registering the query image as a new representative image in the representative image classification database when no resembling representative image is found as a result of the search according to the predetermined similarity level, and d) adding the query image into a group represented by the resembling representative image found as a result of the search according to the predetermined similarity level.

The recording medium having a program written thereto for processing with a computer according to the present invention may further include a step of forming the groups into a hierarchical structure, wherein the forming step further includes the steps of: a) extracting a further query image from the representative images in the representative image classification database, b) searching, according to a further predetermined similarity level, for a further representative image resembling the further query image in a further representative image classification database in which groups of images are represented by respective further representative images, c) registering the further query image as a new further representative image in the further representative image classification database when no resembling further representative image is found as a result of the search according to the further predetermined similarity level, and d) adding the further query image into a group represented by the resembling further representative image found as a result of the search according to the further predetermined similarity level.

Further, a recording medium having a program written thereto for processing with a computer according to the present invention includes the steps of: a) dividing a feature space into three sub-feature spaces, the three sub-feature spaces being composed of two sub-feature spaces disposed within a prescribed radius with respect to two reference points in the feature space,. and another sub-feature space other than the two sub-feature spaces, b) dividing a display space into sub-display regions of three segments, the display space being divided in a same manner as the feature space so that the sub-feature spaces correspond to the sub-display regions, c) repeating the steps a) and b) until the sub-feature spaces and the sub-display regions are divided into minimum units, respectively, and d) arranging each image included in a minimum unit of a sub-feature space to a corresponding one of the minimum units of the sub-display regions.

With the recording medium having a program written thereto for processing with a computer according to the present invention, the reference points may be selected from points disposed nearest to representative points included in the two sub-feature spaces.

Other objects and further features of the present invention will be apparent from the following detailed description when read in conjunction with the accompanying drawings.

Fig.1 is a block diagram showing a structure of an image display apparatus according to an embodiment of the present invention;

Fig.2 is a block diagram showing processes executed with an image display apparatus according to an embodiment of the present invention;

Fig.3 is a view for explaining a location algorithm divided into three segments;

Fig.4 is a view for explaining a state when images are aligned in a single dimension;

Fig.5 is a view for explaining a location algorithm divided into four segments;

Fig. 6 is a plan view showing a portion of the third and fourth layers of Fig.5;

Fig. 7 is a block diagram showing a system structure of a similar image search system;

Fig.8 is an explanatory view showing a folder structure of the file system in Fig.7;

Fig.9 is a view showing a corresponding relation between image file names stored in an image file name file of a file system of the system in Fig.7 and image features stored in an image feature file of the file system of the system in Fig.7; and

Fig.10 is a view showing an example of a search screen and search result screen according to a similar image search system.

In the following, embodiments of the present invention will be described with reference to the accompanying drawings.

1. Structure

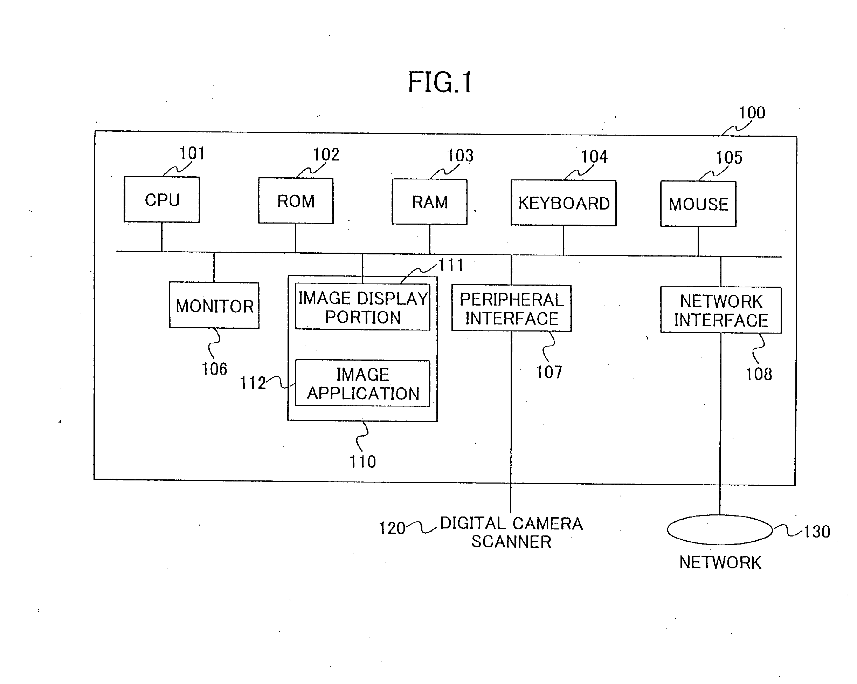

Fig.1 is a block diagram showing a structure of an image display apparatus 100 according to an embodiment of the present invention.

In Fig. 1, the image display apparatus 100 according to an embodiment of the present invention basically comprises a CPU 101, a ROM 102, a RAM 103, a keyboard 104, a mouse 105, a monitor 106, a peripheral I/F (interface) 107, a network I/F (Interface) 108, and an image display unit 110, wherein the image display unit 110 includes an image display portion 111 and an image application 112. The CPU 101 manages control of the entire image display apparatus 100 and the components thereof. A program executed by the CPU 101 is stored in the ROM 102. The CPU executes the program stored in the ROM 102 while using the RAM 103 as a work area. Other than serving as a work area, the RAM 103 stores the dynamic data which is to be used by the CPU 101 during execution of the program. The keyboard 104 and the mouse 105 serve as input apparatuses. The monitor 106 displays information which is to be processed by the CPU 101, or information which the CPU 101 has processed. The peripheral I/F 107 serves as an I/F (interface) relative to a peripheral device such as a digital camera 120 or a scanner, and the network I/F 108 serves as an interface for connection with a network 130.

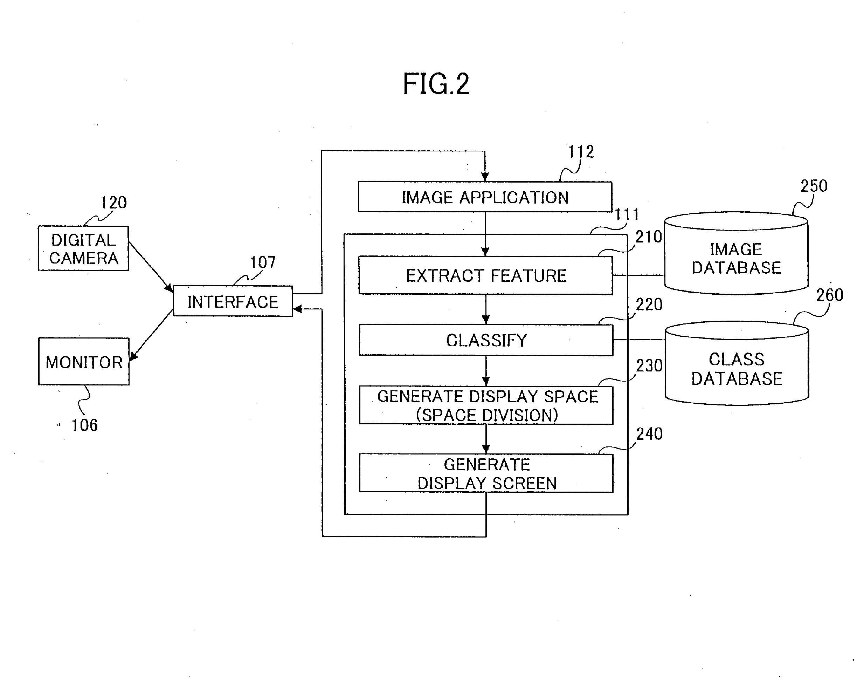

Fig.2 is a block diagram showing processes executed with the image display apparatus 100.

In the image display portion 111, the following processes are executed:

1) extract feature (generation of an image database) 210;

2) classify (generation of a representative image database) 220;

3) generate display space (division of feature space and display space) 230; and

4) generate display screen (arrangement of image). It. is to be noted that the classification process 220 may be omitted in a case where no classification is required.

An image database (hereinafter referred to as "image DB") 250 is used in the process of feature extraction, and a class database (hereinafter referred to as "class DB") 260 is used in the process of classification. It is to be noted that image information from the digital camera 120 is input to the image application 112 via the peripheral I/F 107, and is then output to the monitor 106 after being applied with the aforementioned processes executed in the image display portion 111.

Each of the processes shall be described hereinafter.

2. Feature extraction process .

Various features, such as a histogram feature, an edge feature, or a texture feature, may serve as image features. The present invention may be applied to any of the said features. Needless to say, features other than those extracted from data of an image may also be applied. In this embodiment, a feature extraction process with respect to a typical histogram feature shall be described. Images may be obtained through various methods (e.g. images input through digital cameras, scanners for example, or images downloaded from the WEB), and the input method of the present invention is not to be limited.

In the feature extraction process with respect to a histogram feature, a suitable color space (e.g. Lab, Luv, HSV) is selected, the space is then divided into plural regions, and consideration is then made of which region of the color space corresponds to each pixel in the image. After the number of pixels for each region is counted, normalization by the total number of pixels is performed, so that the data of the normalized number of pixels for each region serves as the histogram feature.

The feature of this histogram shall be a point in the feature space of the histogram. A sum of the difference between the numbers of pixels of two features in respective regions or a Euclidean distance are generally used as the distance between two features in a feature space of a histogram (the distance indicating the similarity of images where similarity increases more toward 0). Thereby, the distance between the features can be obtained. Typical features such as shape or texture may also be used. Accordingly, one image shall correspond to one feature. Therefore, indicating the relation between features in a feature space means that the relation between images shall also be indicated.

3. Generation of display images (views) and generation of a display screen.

An image viewer generates image coordinates for generating views of images registered in a designated image DB 250. If the designated image DB 250 is designated as the class DB 260, a class viewer may be generated. Taking similarity between images (distance between features) into consideration, similar images are basically arranged having close coordinates. The two methods described below are forms for displaying such images (arrangement algorithm). One is a three segment dividing method, and the other is a four segment (grid) dividing method.

The three segment dividing method is a method of recurrently dividing a region into three segments. This method is suited for arrangement in a single dimension. That is, the method is effective in a case of designating a feature to each display coordinate axis. The four segment (grid) dividing method is a method of dividing on a grid basis, which the method is highly precise despite the fact that the method can only display two dimensionally. The methods will be described in detail below.

3.1 Three segment division method

In the following three segment division method, all of the images registered in the image DB are defined as a set of images, and the following process is started without setting the reference points A and B (used in the following process). It is to be noted that the process is called for recurrently.

1) When the number of images in the set of images is 1, set the display coordinates for the image to the coordinates corresponding to the center of the region, and finish the process. When the number of images is 2 or more, divide the set of images into three segments in a manner described below.

In a case where both reference points A and B are not yet determined

a) Define a. given image as image M.
b) Define an image positioned farthest from the image M as image A. That is, define image A as an image of a feature which is positioned farthest from the feature of image M. The method shall hereinafter be described without referring to feature.
c) Define an image positioned farthest from the image A as image B.
d) Among the set of images, define the images which are within a radius R from the image A as a set of images A, define the set of images which are within a radius R from the image B as a set of images B, and define the remaining images as a set of images C.

In a case where only reference point A (reference point B) is determined

a) Define an image positioned nearest to the reference point A (reference point B) as image A (image B).
b) Define an image positioned farthest from the image A (image B) as image B (image A).
c) Among the set of images, define the images which are positioned within a radius R from the image A (image B) as a set of images A (set of images B), define the set of images which are positioned within a radius R from the image B (image A) as a set of images B (set of images A), and define the remaining images as a set of images C.

In a case where both reference points A and B are determined

a) Define an image positioned nearest to the reference point A as image A.
b) Define an image positioned nearest to the reference point B as image B.
c) Among the set of images, define the images which are positioned within a radius R from the image A as a set of images A, define the images which are positioned within a radius R from the image B as a set of images B, and define the remaining images as a set of images C.

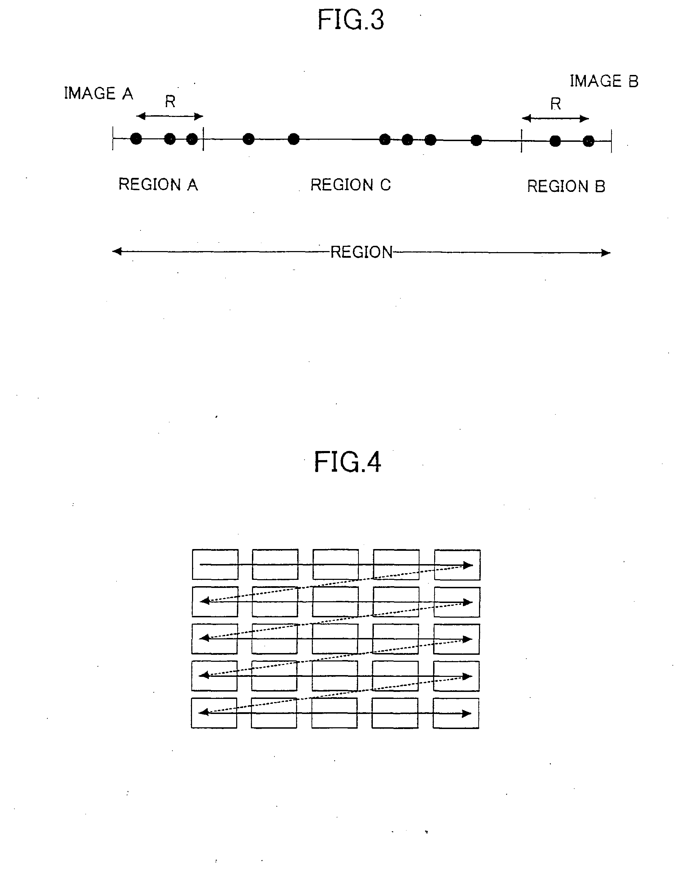

2) Divide a display region into three segments, whereby an axis having the longest range with respect to the display region is divided in proportion to the number of images for the set of images A, the number of images for the set of images B, and the number of images for the set of images C. Define each of the divided display regions as display region A, display region B and display region C, respectively (Fig.3 shows a case where the display region is of a single dimension).
3) Define the display region C as a display region, the set of images C as a set of images, the image A as reference point A, and the image B as reference point B, respectively. Recurrently call for step 1).
4) Define the display region A as a display region, the set of images A as a set of images. Recurrently call for step 1) without setting reference points.
5) Define the display region B as a display region, the set of images B as a set of images. Recurrently call for step 1) without setting reference points.
6) The process is finished.

This method is effective for aligning images in a single dimension. The method may also be applied two dimensionally or three dimensionally by recurrently dividing the display region by using a dimension axis of a display region other than that of the previously divided display region; nevertheless, the reference points shall have no significance due to the changes of the dimension axes. Therefore, precision shall become lower compared to that of a single dimension given that the reference points cannot be used. Aligning the images one dimensionally with this method in a manner shown in Fig.4 enables easy application to typical applications since the images are aligned as a typical image listing display, and enables images to be browsed efficiently since the images are aligned according to similarity.

Since a single dimension coordinate can be obtained for each feature in applying various parameters to the aforementioned method, two dimensional or three dimensional display screens that have features allocated to each display dimension axis may be generated.

3.2 Four segment (grid) division method

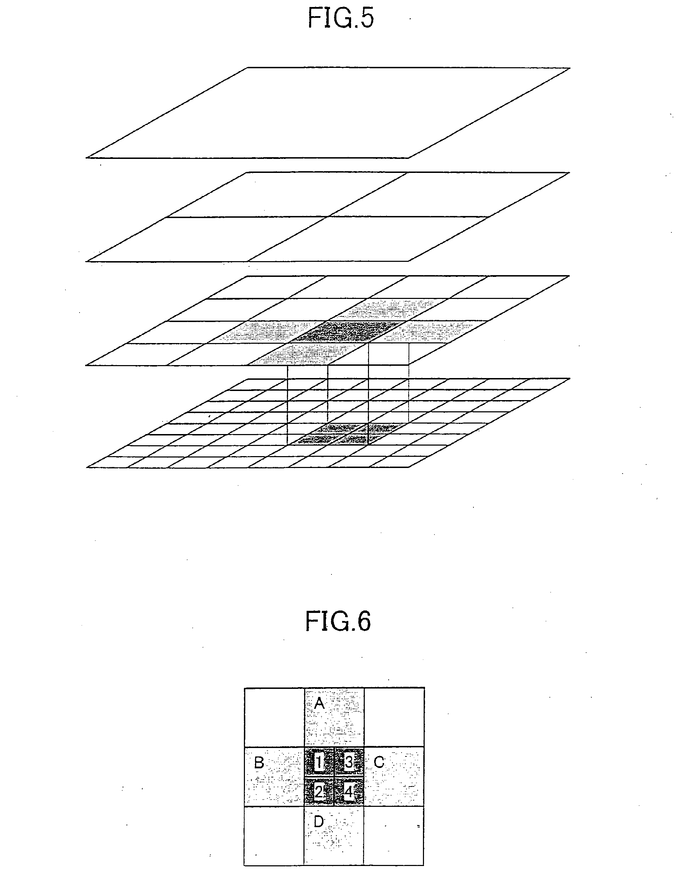

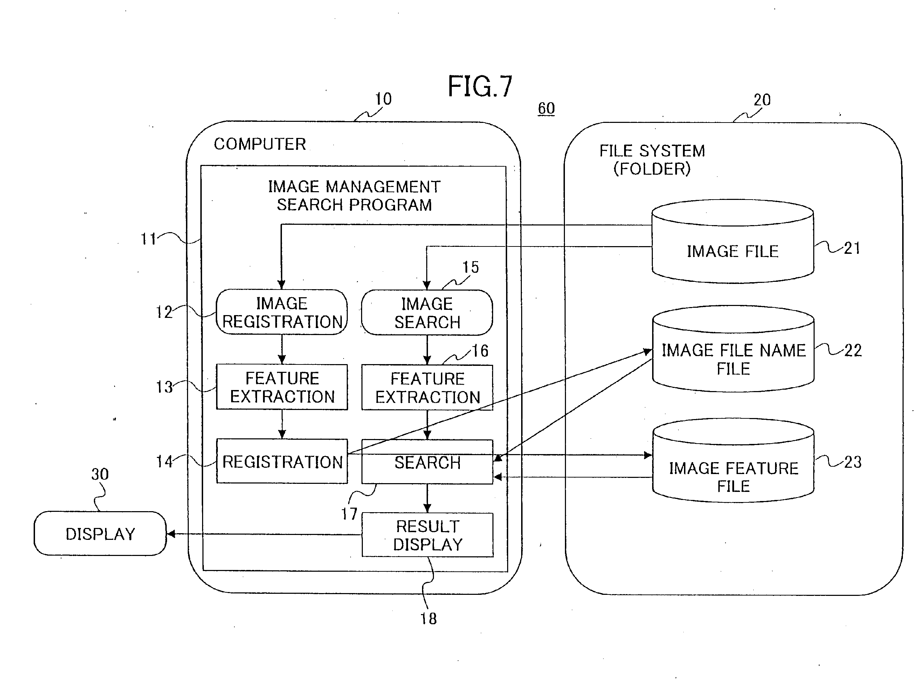

Different from the aforementioned three segment division method, according to the four segment (grid) division method, display regions are divided on a grid space as shown in Fig.5. A display space is generated by dividing, in order, a display region (image space) into four segments. The first four segment division uses a method described with Fig.7 and those after, in which the display region is divided so that images are allocated evenly. The next four segment division is conducted upon adjacent grids of an upper level layer. Division of the portion designated with halftone dots shall be described below with reference to the drawings. Fig.6 is a view of a portion of the third and fourth layers in Fig.5 when observed from above.

In Fig.6, grids A through D are taken into consideration in a case where a center region thereof is divided into four segments. For example, the below given formula may be an evaluation function when obtaining a representative point of region 1 (the upper left region of the center region in Fig.6).

$$E1(p)=D(A,p)+D(B,p)+(1-D(C,p))+(1-D(D,p))$$

It is to be noted that D() is a distance function (function indicating the distance between image features), and A through D are representative points (images) for grids A through D. The representative points for regions 2 through 4 are obtained in a manner similar to that for region 1. Once the representative points are determined, all of the points (images) included in the center region may be allocated in evenly according to the distance relative to the representative points.

An example of a four segment division process is described below.

1) Determine the maximum number of images M for each segmental image from the entire number N of images of the center region, in which M=N/4+1.
2) Select an image one by one from the remaining images, calculate the distance between the representative points for regions 1 through 4, and thereby include the image into the nearest region (for example, region 1).
3) In a case where the number of images in the segmental space exceeds M upon including the image into the region 1, remove an image positioned farthest from the representative point of region 1. Calculate the distance between the removed image and the representative points of the other remaining regions, and thereby include the removed image into the nearest region (for example, region 2). Further, in a case where the number of images of the segmental space exceeds M by including the removed image into the region 2, remove another image from region 2 in a manner similar to that described above, and apply the same process to the segmental regions other than regions 1 and 2. Repeat the process successively whenever the number of images exceeds M in the manner described above.

All of the images can be equally allocated by repeating the processes 1) through 3).

After the images are allocated to all of the grids of a certain layer, the images, in the same aforementioned method of using the grids of an upper level layer, are further allocated to each grid of a lower level layer having further subdivided grids. The process is repeated until the number of images allocated to each grid is no more than 1. After the number of images allocated to each grid is no more than 1, the process is finished.

Thereby, images can be evenly allocated to the display spaces.

Although the aforementioned example is applied to a two dimensional space, the process may also be applied to a three dimensional space.

4. Classification of Images

Although vast amounts of images may be displayed on a single display screen, displaying such vast amounts of images on a single display screen may reduce visibility and may be difficult to practice due to the necessity of reducing the size of a single image or the overlapping of images in a case where size cannot be reduced. In displaying vast amounts of images on a display screen with the present invention, all of the images are not displayed on the display screen. The present invention solves the foregoing problems by automatically classifying the images according to similarity among the images, and then displaying a representative image for each class on the display screen. A method for classifying the images is described below.

5. Classification method

The classification method may be achieved on a similar image search system. The similar image search system may be structured for example in a manner described below. One example of a similar image search system shall be described hereinafter.

Fig.7 is a block diagram showing a system structure of the similar image search system 60. The system 60 includes a computer 10, a file system 20 inside a memory device, and a display 30. An image management search program 11 is stored in the computer 10 to thereby allow an image management search to be conducted according to the program. An image registration routine 12 and an image search routine 15 are included in the image management search program 11. A first feature extraction process 13 and a registration process 14 are conducted in the image registration routine 12. A second feature extraction process 16, a search process 17, and a result display process 18 are conducted in the image search routine 15. The process result of the result display process 18 is output to the display 30, and is then displayed by the display 30.

The file system 20 includes three files which are an image file 21, an image file name file 22, and an image feature file 23.

For example, in a case where an image file obtained from a digital camera, for example, is contained in the memory device of the aforementioned system 60, a registration process in accordance with the following steps is conducted with respect to a designated folder.

    1) Select one given unregistered image file 21 included in a folder. (File selection)
    2) Execute feature extraction process to extract an image feature from the selected image file 21. (Feature extraction process)
    3) Execute a registration process, in which the image file name of the image file 21 is registered in the image file name file 22 for enabling designation of the image file 21, and the image feature is registered in the image feature file 23 in correspondence to the image file name. (Registration process)
    4) If there is an unregistered image file 21 in the folder, return to step 1). If there is no unregistered image file 21 in a folder, the process is finished.

The search process is performed as follows.

    1) Input a query image serving as the subject for the search. The input image is not required to be an image located in the folder. (Search input)
    2) Execute a feature extraction process to extract an image feature from the query image. (Feature extraction process)
    3) Execute a search process to search for an image feature which is similar to the image feature of the query image. In searching for the similar image, the image feature of the query image may be compared to each of the image features of all of the images, or a spatial index such as an R-tree may be employed. Then, an image file name corresponding to the image feature of the search result is obtained from the image file name file 22, and a search result of the image file name is generated. (Search process)
    4) Execute a search result display process in which the image file 21 is listed according to the search result of the image file name, and is displayed in the display 30. (Display process)

Details of the image registration routine 12 are given below.

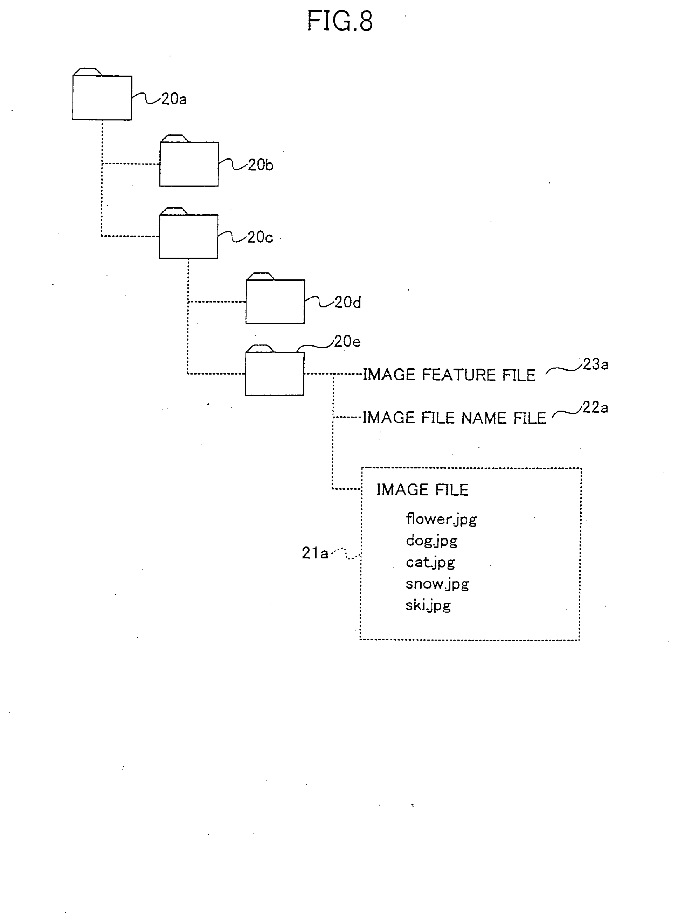

The folder structure of Fig.8 shows an example of a case where the folders of the file system 20 of the computer have a hierarchical structure of three layers including folders 20a (first layer), 20b and 20c (second layer), 20d and 20e (third layer), and where vast amounts of images are included in a particular folder 20e of the third layer. In such a case, an image feature file 23a and an image file name file 22a may be disposed in a folder at which the image is located or another folder corresponding to a folder at which the image is located.

The image feature extracted in the first feature extraction process 13 may use the feature employed, for example, in Japanese laid-open publication No. 2000-187731. Further, a typical color histogram, for example, may be used in the aforementioned image search. In the feature extraction described in Japanese laid-open publication No.2000-187731, each pixel forming a provided image is designated to one of the regions in a prescribed divided color space according to the color of the pixel, and a color histogram of the image is then generated according to the number of pixels included in each of the regions, and thereby, the feature of the image described by the color histogram serves as the feature subject for extraction. In the extraction, the color space is a color space conforming to human color recognition, and is divided into regions with values conforming to human color recognition. The data of such features can be described as vector data (multi-dimensional data).

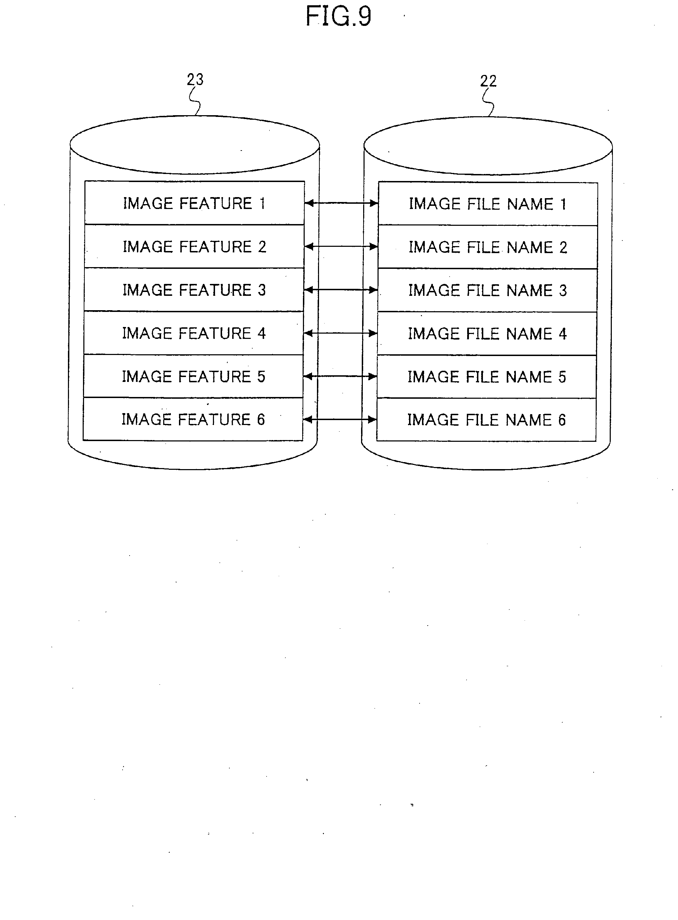

In the registration process 14, as shown in Fig. 9, the image features and the image file names are made to correspond to each other in pairs, and are registered in the image feature file 23 and the image file name file 22, respectively. By registering the image features and the image file names in correspondence to each other in pairs, one of the pairs can be easily found from the search if the other one of the pairs is found since the corresponding one of either is apparent. Other than the image feature, a feature index file may also be provided for achieving a high speed search. For example, an R-tree which is a typical multi-dimensional spatial index may be employed as the index file.

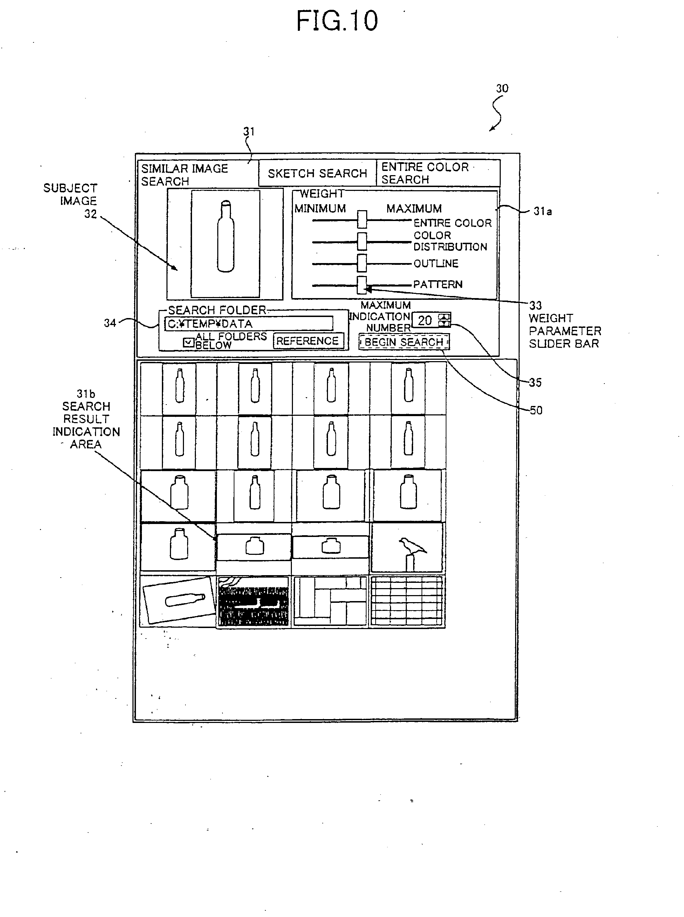

In the image search routine 15, a feature from a prescribed image is extracted in the second feature extraction process 16 in the same manner as that of the feature extraction in the afore described image registration process (first feature extraction process 13). The extracted image feature is subject to a one by one similarity comparison with the image features in the image feature file 23. A typical distance formula such as a Euclid distance may be used since the similarity is described as the distance inside the feature vector space. In using plural features, the weight for each of the features may be designated by the user. The image features are sorted in an order starting from the one having the shortest distance relative to the image feature of the query image (close similarity). Images having closest similarity are presented in a number predetermined by the user, and are represented as the results of the image search. Alternatively, images which have image features within a threshold value of a distance (similarity level) predetermined by the user can be presented as the results of the image search. Thereafter, image file names corresponding to the above-given image features are obtained from the image file name file 22, and respective image files 21 are loaded to thereby display the images on the display 30. An example of a search screen and a search result screen is shown in Fig.10. Fig.10 is a front view of a screen of the display 30.

In Fig.10, the similar image search screen 31 has a control indication area 31a and a search result indication area 31b, in which the control indication area 31a is disposed on an upper side thereof, and the' search result indication area 31b is disposed on a lower side thereof.

A search subject image (subject image) 32 is displayed on the top portion of the control indication area 31a, and a slider bar 33 for designating weight parameter of "entire color", "color distribution", "outline" and "pattern", respectively, is displayed on a right side thereof. A designation input portion 34 of a search folder is disposed below the search subject image 32, and an indication number input portion 35 for inputting a maximum indication number for the search is disposed below the slider bar 33 (slide input portion). In this screen, the search folder is C¥TEMP¥DATA, and the maximum indication number is 20. Designation of an image folder or designation for searching a lower level folder may be executed with the designation input portion 34. After input and designation are completed, a search based on the aforementioned settings shall commence upon selecting a search beginning key 50 disposed below the indication number input portion 35.

Similar images found from the search are indicated in the search result indication area 31b. In this example, 20 images are indicated since the maximum indication number is set to 20. The user may then select a desired image from the images.

In some cases, an image in a folder may be edited or an image file may be added to a folder. Therefore, the user may designate a folder and execute an image registration check so as to check whether the image file 21 in the designated folder is registered in the image file name file 22, and also to re-register the image file 21 according to circumstance. The process is described below.

(1) Select one given image file 21 among the images in a folder.
(2) In a case where the selected image file 21 does not exist in the image file name file 22, newly register the image file 21.
(3) Even in a case where the image file 21 exists in the image file name file 22, re-register the image file 21 if the time of update of the image file 21 is newer than the time of registration of the image file 21. It is to be noted that time of registration is required to be recorded to image file name file 22 during registration in order to execute the re-registration.
(4) Return to step (1) if there is an unprocessed image file.
(5) Remove an image file 21 in the image file name file 22 having an image feature that does not exist in the folder from the image feature file 23 and the image file name file 22.

With the similar image search system, image features are previously extracted from images of each folder, and the image feature and the image file name are registered as pairs corresponding to each other in the image feature file 23 and the image file name file 22, so that images can be searched in each folder by using the image feature when conducting the search. Furthermore, even in a case where the user has changed the image file 21 relative to an already registered folder, the image feature can be updated. Furthermore, in accordance with the designation from the designation input portion 34, all folders which are of lower levels than the folder designated during the search may also be subject to search.

A case where an image is already registered in the image DB of the aforementioned similar image search system 60 shall be described below. According to a class DB name, a feature weight W during classification, and a similarity of class (distance of feature space) R which are designated by the user, a classification process described below is conducted.

1) Generate a class DB on the similar image search system 60. The class DB serves as a database of representative images for each class.
2) Derive an image (image A), in order, from the image DB and execute the below-given process. End the process when all images have been derived.
3) Search the image A representing a query image from the class DB by using the designated weight of the feature W and the designated similarity of class (distance) R. That is, search an image having a feature within the distance R, in which the point of the image feature of the image A disposed on a feature space is the center of the distance R. Return to step 2) even when a single representative image is found from the class DB. The finding of the representative image signifies that the image A belongs to a class of the found representative image. This means that no new class is required to be formed.

4) If no representative image is found from the class DB, register the image A to the class DB as a representative image of a class, and return to step 2). Finding no representative image signifies that the image A at that time belongs to no registered class, and a new class is therefore required to be formed.

By executing the aforementioned process, representative images for respective classes are registered in the class DB. In obtaining an image included in a class, a representative image of a class employed as a query image may be used for searching from the image database.

This process is based on a basic clustering method referred to as a NN (nearest neighbor) method. Although the process time of the NN method lengthens as the number of images increases, this process being applied to a similar image search system, however, may substantially increase the speed of classification when applied to a high speed similar image search system.

Since the aforementioned class DB is also an Image DB, the number of classes can be reduced by further classifying the class DB into hierarchical classes in such a case where the classes have increased to a considerable number.

6. Class data structure

The data given below is structured for corresponding to a case where classes are generated hierarchically upon increase in the number of classes, or a case where plural classes using different image features with respect to a single image DB 250 are generated. The below indentions are meant to indicate an inclusive relation of a file system directory where a DB directory is indicated to include the image DB 250 and a class DB therein.

·image DB directory (image DB name directory) (①)
　　· image DB (②)
　　· (first) class DB directory (class DB name) directory (③)
　　　　·(second) class DB (④)

The image DB 250 and the class DB 260 are databases managed by the image search system. ① and ② have the exact same structures as those of ③ and ④. As mentioned above, since the class DB 260, in terms of data, may also serve as one of the image DB (databases) 250, the representative images in class DB 260 may be further classified. A data structure for such a case is given below.

· Image DB directory (image DB name directory) (①)
　　·image DB (②)
　　　· first DB directory (class DB name) directory (③)
　　　　· first class DB (④)
　　　　·second class DB directory (class DB name) directory (⑤)
　　　　　　·second class DB (⑥)

In the same manner, class DB (databases) can be recurrently formed with any number of levels by using the levels of the directory. Since class levels are expressed with use of the directory of the file system, the present system has an advantage of not having to manage the class levels.

The below given data structure shows a case where different features are designated relative to a single image database for forming plural class databases.
·image DB directory (image DB name directory) (①)
　　·image DB (②)
　　·A class DB directory (class DB name) directory (③)
　　　　· A class DB (④)
　　·B class DB directory (class DB name) directory (⑤)
　　　　· B class DB (⑥)

7. Forming views for class images

Views for a large size image database can be generated efficiently by generating views in combination with the aforementioned class. Although views may be generated by using the aforementioned view generating method with respect to the images registered in the image DB 250, the user may have difficulty in looking at the views in a case where there are vast amounts of images. Accordingly, the class DB 260 may instead be used in forming views since only the images which represent the classes, that is, only the images which represent the entire set of images are registered in the class DB. In a case where there still are a large number of representative images, a second level of classes may be formed beforehand so that views for a second level of the class DB 260 may be formed. The structures of the levels may be expressed with the levels of an existing file system directory, and each class is composed of independent databases of the same form. Therefore, management of the class levels is not required, and processing may be conducted in a manner similar to that of the image DB 250, the first class DB, and the second class DB.

Although this embodiment describes an example of using a feature extracted from an image, it is to be noted that this invention may be applied to any feature (e.g. feature extracted from a document).

With the present invention, a classification method and an image feature displaying method can be provided so as to efficiently and precisely display the feature spaces for a vast amount of images.

Furthermore, a program and a recording medium storing the program therein can be provided so as to efficiently and precisely display the feature spaces for a vast amount of images on a computer.

Further, the present invention is not limited to these embodiments, but various variations and modifications may be made without departing from the scope of the present invention.

The present application is based on Japanese priority application No. 2002-223944 filed on July 31, 2002 with the Japanese Patent Office, the entire contents of which are hereby incorporated by reference.

## Claims

1. A method of classifying an image, comprising the steps of:

    extracting a query image from a plurality of images in an image database;

    searching, according to a predetermined similarity level, for a representative image resembling the query image in a representative image classification database in which groups of images are represented by respective representative images;

    registering the query image as a new representative image in the representative image classification database when no resembling representative image is found as a result of the search according to the predetermined similarity level; and

    adding the query image into a group represented by the resembling representative image found as a result of the search according to the predetermined similarity level.

2. The method as claimed in claim 1, wherein the images in the image database are obtainable by referring to the respective representative images in accordance with the predetermined similarity level.

3. The method as claimed in claim 1 or 2, further comprising a step of forming the groups into a hierarchical structure, wherein the forming step further includes the steps of:

    extracting a further query image from the representative images in the representative image classification database;

    searching, according to a further predetermined similarity level, for a further representative image resembling the further query image in a further representative image classification database in which groups of images are represented by respective further representative images;

    registering the further image query as a new further representative image in the further representative image classification database when no resembling further representative image is found as a result of the search according to the further predetermined similarity level; and

    adding the further query image into a group represented by the resembling further representative image found as a result of the search according to the further predetermined similarity level.

4. The classification method as claim in claim 3, wherein the hierarchical structure is formed as layers of a directory of a file system for managing the images in the image database.

5. An image feature space display method comprising the steps of:

    determining k representative points (k being an integer which is more than 1) in a feature space in response to a distance between points in the feature space and representative points representative of a plurality of feature spaces surrounding the feature space;

    obtaining k sub-feature spaces by evenly allocating the points in the feature space into k representative points;

    dividing a display space into sub-display regions of k segments, the display space being divided in a manner so that the sub-feature spaces correspond to the sub-display regions; repeating the steps of determining, obtaining and dividing until the sub-feature spaces and the sub-display regions are divided into minimum units, respectively; and

    arranging each image included in a minimum unit of a sub-feature space to a corresponding one of the minimum units of the sub-display regions.

6. The image feature space display method as claimed in claim 5, wherein the display space is two dimensional, wherein the feature space and the display space are divided into four sub-feature spaces and four sub-display regions in a grid manner, respectively, wherein the representative points are disposed proximally with respect to two feature spaces which are arranged adjacent to each other and tangent to the sub-feature spaces, and this disposed distally with respect to two other feature spaces which are arranged adjacent to each other but not tangent to the sub-feature spaces.

7. The image feature space display method as claimed in claim 5, wherein the display space is three dimensional, wherein the feature space and the display space are divided into eight sub-feature spaces and eight display regions in a grid manner, respectively, wherein the representative points are disposed proximally with respect to three feature spaces which are arranged adjacent to each other and tangent to the sub-feature spaces, and thus disposed distally with respect to three other feature spaces which are arranged adjacent to each other but not tangent to the sub-feature spaces.

8. The image feature space display method as claimed in claims 5, 6 or 7, wherein the points in the feature space represent images in a representative image classification database which are classified by the method of any one of claims 1 to 4.

9. An image feature display method comprising the steps of:

dividing a feature space into three sub-feature spaces, the three sub-feature spaces being composed of two sub-feature spaces disposed within a prescribed radius with respect to two reference points in the feature space, and another sub-feature space other than the two sub-feature spaces;
dividing a display space into sub-display regions of three segments, the display space being divided in a same manner as the feature space so that the sub-feature spaces correspond to the sub-display regions;
repeating the steps of dividing a feature space and dividing a display space until the sub-feature spaces and the sub-display regions are divided into minimum units, respectively; and
arranging each image included in a minimum unit of a sub-feature space to a corresponding one of the minimum units of the sub-display regions.

10. The image feature space display method as claimed in claim 9, wherein the reference points are selected from points disposed nearest to representative points included in the two sub-feature spaces.

11. A computer program comprising program code means that, when executed on a computer system, instructs the computer system to perform the method of any one of the preceding claims.

12. A computer-readable storage medium having recorded thereon a computer program according to claim 11.

# FIG.1

CPU — 101
ROM — 102
RAM — 103
KEYBOARD — 104
MOUSE — 105

100

MONITOR — 106
IMAGE DISPLAY PORTION — 111
IMAGE APPLICATION — 112
PERIPHERAL INTERFACE — 107
NETWORK INTERFACE — 108

110

120 DIGITAL CAMERA SCANNER

130 NETWORK

EP 1 387 303 A2

# FIG.2

# FIG.3

# FIG.4

# FIG.5

# FIG.6

# FIG.7

COMPUTER 10

IMAGE MANAGEMENT SEARCH PROGRAM 11

IMAGE REGISTRATION 12

IMAGE SEARCH 15

FEATURE EXTRACTION 13

FEATURE EXTRACTION 16

REGISTRATION 14

SEARCH 17

RESULT DISPLAY 18

DISPLAY 30

FILE SYSTEM (FOLDER) 20

IMAGE FILE 21

IMAGE FILE NAME FILE 22

IMAGE FEATURE FILE 23

60

EP 1 387 303 A2

# FIG.8

20a

20b

20c

20d

20e

IMAGE FEATURE FILE 〜23a

IMAGE FILE NAME FILE 〜22a

IMAGE FILE

21a

flower.jpg
dog.jpg
cat.jpg
snow.jpg
ski.jpg

# FIG.9

23

22

| IMAGE FEATURE 1 | ←→ | IMAGE FILE NAME 1 |
| IMAGE FEATURE 2 | ←→ | IMAGE FILE NAME 2 |
| IMAGE FEATURE 3 | ←→ | IMAGE FILE NAME 3 |
| IMAGE FEATURE 4 | ←→ | IMAGE FILE NAME 4 |
| IMAGE FEATURE 5 | ←→ | IMAGE FILE NAME 5 |
| IMAGE FEATURE 6 | ←→ | IMAGE FILE NAME 6 |

# FIG.10